# EUROPEAN PATENT SPECIFICATION

(11) **EP 3 081 840 B1**
(45) Date of publication and mention of the grant of the patent: **11.04.2018**
(21) Application number: 14885413.6
(22) Date of filing: 13.03.2014
(51) Int. Cl.: F16M 11/04, F16M 13/00, G03B 17/56

(54) **LOCKING APPARATUS**
VERRIEGELUNGSANORDNUNG
APPAREIL DE VERROUILLAGE

(43) Date of publication of application: 19.10.2016
(73) Proprietor: SZ DJI Osmo Technology Co., Ltd., Nanshan District, Shenzhen, Guangdong 518057 (CN)
(72) Inventor: ZHAO, Yanchong, Shenzhen Guangdong 518057 (CN)
(74) Representative: Goddar, Heinz J.
(86) International application number: PCT/CN2014/073413
(87) International publication number: WO 2015/135190

(56) References cited:
- EP-A2- 2 322 839
- WO-A2-2007/115225
- DE-U1- 9 108 256
- GB-A- 2 401 037
- US-A1- 2010 243 851
- US-A1- 2011 042 535
- US-B1- 8 534 934

## Description

### FIELD

The subject matter generally relates to locking devices.

### BACKGROUND

When shutterbugs and vocational cameramen are shooting outdoors, they assemble a camera or vidicon on a quick mounting plate after adjusting an angle of a mounting gimbal, and then assemble the quick mounting plate with the camera or vidicon mounted thereon to a fixing support of the mounting gimbal, for selecting a better shooting angle and affect. The quick mounting plate can be locked by adjusting a locking device of the quick mounting plate. The general locking device of the quick mounting plate includes a first locking element, a second locking element, and a plurality of springs deposited on the second locking element. A volume of the locking device is bulk and it is difficult to assemble. Further, the spring will swing when the spring is compressed or extended, which will result in a looseness of the spring and an un-exact lock of the locking device when the spring enters or exits the quick mounting plate.

EP 2 322 839 A2 describes ae mounting device that comprises a holder, which has a bearing surface for the optical equipment. The holder is inserted into a clamping plate of a quick-clamping unit. The holder has a retainer, in which a water level is detachably inserted. The retainer comprises a retaining section formed as accessory shoe.

US 2011/042535 A1 describes a positioning apparatus for an optical instrument that includes a base seat, a holder and at least one sliding member. The bottom of the base seat is formed with a sliding groove. The sliding groove has an opening facing downward. The width of the opening is smaller than the maximum width of the sliding groove. The base seat is formed with plurality of fixation holes, which are arranged along the longitudinal direction of the sliding groove. The holder is disposed on the base seat. The holder is adapted for the optical instrument to be assembled thereon. The sliding member has a suitable cross-section, so that the sliding member is slidably disposed in the sliding groove. The sliding member abuts selectively against one of the fixation holes.

WO 2007/115225 A2, which contains all the features of the preamble of claim 1, describes an assembly for securing the eyepiece of an endoscope to a digital camera includes a bar that supports the camera and a block that supports the eyepiece. The camera can be secured to the bar using the camera's tripod mounting hole. The block can normally move in three orthogonal linear directions relative to the bar, but can also be locked in a selected position relative to the bar. In this manner, the assembly can be adjusted so that the eyepiece of the endoscope contacts or nearly contacts the end of the barrel of the digital camera secured to the camera bar. Then, the support block can be locked into position to clamp the endoscope to the digital camera. A sheet is attached to one of the components and can be draped over the camera prior to use of the camera in a sterile environment.

US 8 534 934 B1 describes a camera stabilization device that allows a film or digital video camera to be flown out of arms reach of the operator and maintain orientation toward the subject matter, while allowing the operator control of rotation or pan of the camera.

### SUMMARY OF THE INVENTION

An aspect of the present invention provides locking device capable of increasing the precision, reducing the volume thereof and easily in assembly or disassembly.

According to an aspect of the present invention, there is provided a locking device including: a quick release coupling board; and a sliding assembly configured to be slidably connected with the quick release coupling board; wherein the locking device further comprises a locking assembly, and the locking assembly is connected to the sliding assembly for locking the quick release coupling board and the sliding assembly.

The quick release coupling board comprises a bottom plate and two opposite side walls, the two side walls each define a sliding slot, each sliding slot comprises a blocking sheet opposite to the bottom plate, the sliding assembly comprises a guiding piece and a seat, a shape and size of the guiding piece are corresponding to a shape and size of the sliding slot, the guiding piece comprises a first sliding plate and a second sliding plate connected with the first sliding plate, a step surface is formed on the first sliding plate where the first sliding plate and the second sliding plate are connected, a connecting pole extends from the second sliding plate perpendicularly,
first screw threads are defined on outer surface of the connecting pole, the seat comprises a center portion, a through hole is defined in the seat and configured to penetrate through the center portion, the connecting pole penetrates through the through hole of the seat, the locking assembly comprises a first locking element, the first locking element comprises a first main body and a connecting portion perpendicular to the first main body, the connecting portion is a hollow structure with a first screw hole defined therein, the first screw hole and the first screw threads of the connecting pole are coupled, when it is needed to lock the quick release coupling board with the sliding assembly, the first screw hole of the first locking element is screwed with the first screw threads of the connecting pole, when the first locking element is locked firmly, the step surface of the first guiding piece is locked with the blocking sheet.

In some embodiments, the connecting portion and the though hole can be all circled-shaped, and a radius of the connecting portion is smaller than a radius of the through hole.

In some embodiments, two locating blocks can be formed on a top surface of the center portion, the two locating blocks face each other, a sliding opening is defined in two sides of each locating block respecting to the sliding slot, and the seat is connected to the quick release coupling board via the sliding openings.

In some embodiments, the top surface and the two locating block together form a receiving portion for receiving the guiding piece.

In some embodiments, the bottom plate can be rectangular, the side walls each extend perpendicularly from periphery sides of the bottom plate downwards, and each blocking sheet is integrately formed on the corresponding side wall.

In some embodiments, the seat can comprise elastic holding portion each positioned on one side of the center portion, and the elastic holding portions each are configured to clip a pipe.

In some embodiments, a channel can be defined in middle of the center portion, the channel penetrates through two opposite sidewalls of the center portion and connects the two elastic holding portions.

In some embodiments, the locking assembly can comprise a second locking element screwed with the first locking element, the second locking element can comprise a second main body and an abutting portion perpendicular to the second main body, a recess is defined in the second main body, a shape and size of the recess are corresponding to those of the first main body for receiving the first main body, the abutting portion is a hollow structure with a second screw hole defined therein, the second screw hole penetrates through the abutting portion and connects with the recess, male screw threads are formed on an outer surface of the connecting portion, the second screw hole and the male screw threads of the connecting portion are coupled, when the pipe is sleeved in the elastic clip loose, the sliding assembly can slide along the pipe, when the pipe is sleeved in the elastic clip firmly, the second screw hole of the second locking element is screwed with the male screw threads of the first locking element, the abutting portion abuts the center portion of the seat, the second locking element is screwed firmly towards the seat, thereby the elastic clip is firmly clipped to the pipe.

In some embodiments, the locking device can be mounted on a mounting gimbal, a plurality of locating holes can be defined in the bottom plate for fixing an image device.

Advantages of the present disclosure: compared with the traditional technology, the quick release coupling board can be slidably connected with the sliding assembly, and the locking device can lock the quick release coupling board to the sliding assembly, thus, the quick release coupling board can be locked at any predetermined position of the sliding assembly through the locking device, which increases the precision of the quick release coupling board and reduces the volume thereof easily in assembly or disassembly.

### BRIEF DESCRIPTION OF THE DRAWINGS

Implementations of the present technology will now be described, by way of example only, with reference to the attached figures.
FIG. 1 is an isometric view of a locking device in accordance with an exemplary embodiment of the present disclosure.
FIG. 2 is an exploded perspective view of the locking device, in accordance with embodiments.
FIG. 3 is a front view of the locking device of FIG. 2, in accordance with embodiments.
FIG. 4 is a front view of a first locking element in the locking device of FIG. 1, in accordance with embodiments.

### DETAILED DESCRIPTION

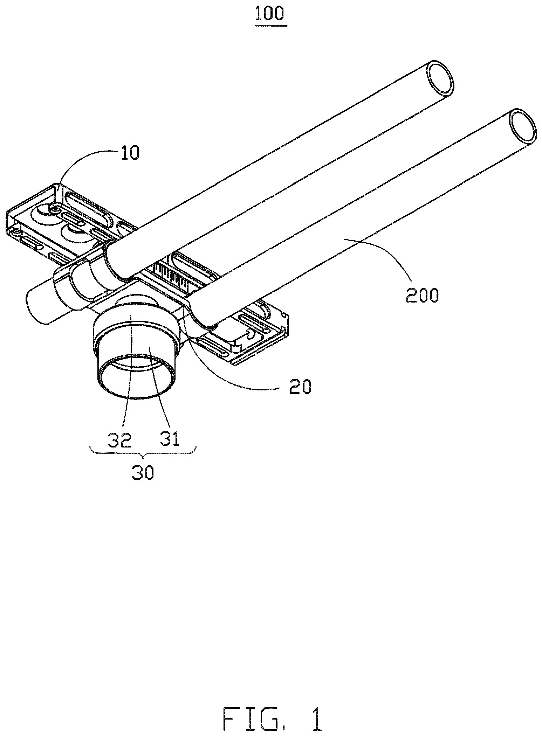

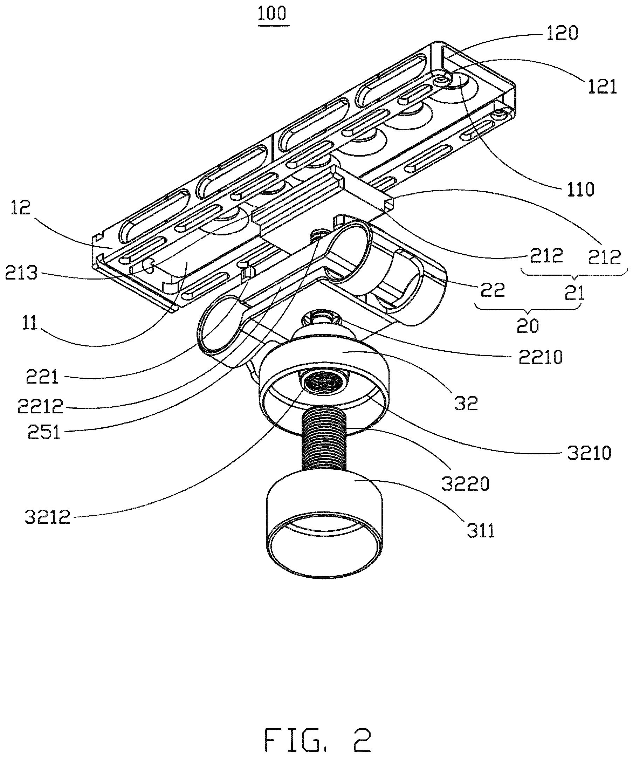

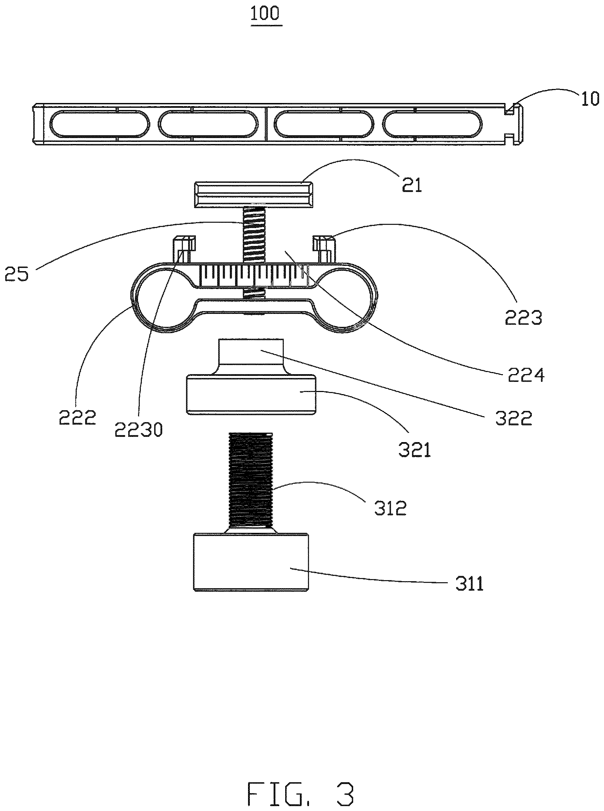

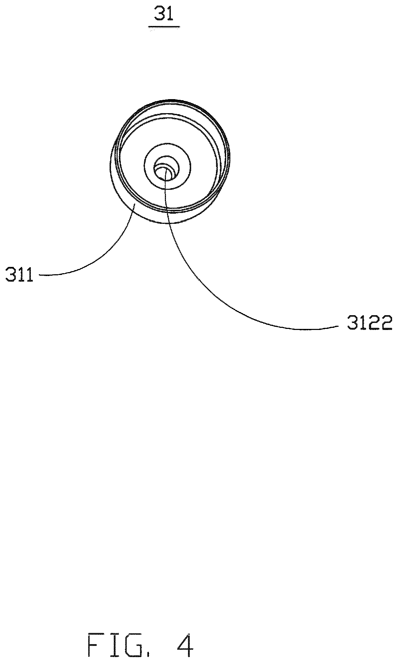

Referring to FIGS. 1-4, the present disclosure provides a locking device 100, which includes a quick release coupling board 10, a sliding assembly 20, and a locking assembly 30. In the illustrated embodiment, the locking device 100 is mounted on a gimbal. The quick release coupling board 10 is slideably connected to the sliding assembly 20. The locking assembly 30 is connected to the sliding assembly 20 and is configured to lock the quick release coupling board 10 to the sliding assembly 20.

The quick release coupling board 10 includes a bottom plate 11 and two opposite side walls 12. In the illustrated embodiment, the bottom plate 11 is substantially rectangular. The side walls 12 each extend perpendicularly downwards from a respective one of periphery sides of the bottom plate 11. The two side walls 12 each define a sliding slot 120. Each sliding slot 120 includes a blocking sheet 121. Both the two blocking sheets 121 are opposite to the bottom plate 11. Each blocking sheet 121 is integrally formed with the corresponding side wall 12. A plurality of locating holes 110 are defined on the bottom plate 11. In the illustrated embodiment, the locating holes 110 are configured to fix an image device, such as a camera.

The sliding assembly 20 includes a guiding piece 21 and a seat 22.

A shape and size of the guiding piece 21 are corresponding to those of the sliding slot 120. Specially, the guiding piece 21 includes a first sliding plate 211 and a second sliding plate 212 connected to the first sliding plate 211. In the illustrated embodiment, a width of the first sliding plate 211 is greater than that of the second sliding plate 212. The first sliding plate 211 defines a step surface 213 formed on where the first sliding plate 211 and the second sliding plate 212 are connected. A connecting pole 25 extends from the second sliding plate 212 substantially perpendicularly. First screw threads 251 are defined on outer surface of the connecting pole 25.

The seat 22 includes a center portion 221 and elastic holding portion 222, and each of the elastic holding portions 222 are positioned on one side of the center portion 221.

Two locating blocks 223 are formed on a top surface 221 of the center portion 221. The top surface 221 is adjacent to the quick release coupling board 10. The two locating blocks 223 face with each other. A sliding opening 2230 is defined in two sides of each locating block 223, respect to the sliding slot 120. The top surface 221 and the two locating blocks 223 cooperatively form a receiving portion 224 for receiving the guiding piece 21. The seat 22 defines a through hole 2210 is defined in the seat 22 through the center portion 221. In the illustrated embodiment, the through hole 2210 is circle-shaped. In the illustrated embodiment, each elastic holding portion 222 is a hollow circle tube and configured to clip a pipe 200. A channel 2212 is defined in middle of the center portion 221. The channel 2212 penetrates through two opposite sidewalls of the center portion 221 and communicates with the two elastic holding portions 222.

The locking assembly 30 includes a first locking element 31 and a second locking element 32 screwed with the first locking element 31. The first locking element 31 includes a first main body 311 and a connecting portion 312 substantially perpendicular to the first main body 311. The connecting portion 312 is columned-shaped. Male screw threads 3120 are formed on outer surface of the connecting portion 312. The connecting portion 312 is a hollow structure with a first screw hole 3122 defined therein. The first screw hole 3122 and the first screw threads 251 of the connecting pole 25 can be coupled. In the illustrated embodiment, the first screw hole 3122 penetrates through the connecting portion 312. In the illustrated embodiment, a radius of the connecting portion 312 is smaller than that of the through hole 2210.

The second locking element 32 includes a second main body 321 and an abutting portion 322 substantially perpendicular to the second main body 321. A recess 3210 is defined in the second main body 321. A shape and size of the recess 3210 are corresponding to those of the first main body 311 for receiving the first main body 311. The abutting portion 322 is a hollow structure with a second screw hole 3212 defined therein. The second screw hole 3212 penetrates through the abutting portion 322 and communicates with the recess 3210. In the illustrated embodiment, the second screw hole 3212 and the male screw threads 3120 of the connecting portion 312 can be coupled.

When the locking device 100 is assembled, the connecting pole 25 is penetrated through the though hole 2210 of the seat 22, and the guiding piece 21 is received in the receiving portion 224. The second screw hole 3212 of the second locking element 32 are threadedly engaged with the male screw threads 3120 of the connecting portion 312 of the first locking element 31, with the abutting portion 322 of the second locking element 32 being away from the first locking element 31. Finally, the seat 22 is connected to the quick release coupling board 10 via the sliding openings 2230 at two sides of each locating block 223. The step surface 213 faces the blocking sheet 121.

When the locking device 100 is used, the step surface 213 of the first guiding piece 21 is coupled to the blocking sheet 121 loose, the quick release coupling board 10 can slide in the seat 22 of the sliding assembly 20 via the loose coupling between the first sliding plate 211 and the sliding slot 120. When it is needed to lock the quick release coupling board 10 with the sliding assembly 20, the first screw hole 3122 of the first locking element 31 is threadedly engaged with the first screw threads 251 of the connecting pole 25 to screw the first locking element 31 firmly. The step surface 213 of the first guiding piece 21 is locked with the blocking sheet 121 so firmly that the quick release coupling board 10 and the sliding assembly 20 are secured.

When the pipe 200 is sleeved in the elastic holding portion 222 loose, the sliding assembly 20 can slide along the pipe 20. When the pipe 200 is sleeved in the elastic holding portion 222 firmly, the second screw hole 3212 of the second locking element 32 is threadedly engaged with the male screw threads 3120 of the first locking element 31, the abutting portion 322 abuts against the center portion 221 of the seat 22, the second locking element 32 is screwed firmly towards the seat 22, therefore the pipe 200 is clipped by the elastic clip 222 firmly.

It is to be understood that numerous variations, changes and substitutions will now occur to the sliding assembly and the locking assembly without departing from the invention. For example, when the pipe 200 does not need to be firmly held by the locking device 100, there is no need to define the channel 2212 in the seat 22 and to form the elastic holding portion 222, the second locking element 32 can also be omitted.

The quick release coupling board can slide together with the sliding assembly in the present disclosure provides, and the quick release coupling board and the sliding assembly can be locked via the locking assembly. Thus, the quick release coupling board can be locked at any position of the sliding assembly, which achieves an exact lock of the quick release coupling board and decrease a volume of the locking device for assembling.

It is to be further understood that even though numerous characteristics and advantages have been set forth in the foregoing description of embodiments, together with details of the structures and functions of the embodiments, the disclosure is illustrative only; and that changes may be made in detail, according in matters of shape, size, and arrangement of parts within the principles of the disclosure to the full extent indicated by the broad general meaning of the terms in which the appended claims are expressed.

The embodiments shown and described above are only examples. Many details are often found in the art such as the other features of an optical waveguide lens. Therefore, many such details are neither shown nor described. Even though numerous characteristics and advantages of the present technology have been set forth in the foregoing description, together with details of the structure and function of the present disclosure, the disclosure is illustrative only, and changes may be made in the detail, especially in matters of shape, size and arrangement of the parts within the principles of the present disclosure up to, and including the full extent established by the broad general meaning of the terms used in the claims. It will therefore be appreciated that the embodiments described above may be modified within the scope of the claims.

## Claims

1. A locking device, comprising:
a quick release coupling board (10); and
a sliding assembly (20) configured to be slidably connected with the quick release coupling board (10);
wherein the locking device further comprises a locking assembly (30), and the locking assembly (30) is connected to the sliding assembly (20) and is configured to lock the quick release coupling board (10) to the sliding assembly (20),
wherein the quick release coupling board (10) comprises:
a bottom plate (11) and two opposite side walls (12), the two side walls (12) each define a sliding slot (120), each sliding slot (120) comprises a blocking sheet (121) opposite to the bottom plate (11);
wherein the sliding assembly (20) comprises:
a guiding piece (21) and a seat (22), a shape and size of the guiding piece (21) are corresponding to a shape and size of the sliding slot (120), the guiding piece (21) comprises a first sliding plate (211) and a second sliding plate (212) connected to the first sliding plate (211), the first sliding plate (211) defines a step surface (213) formed on where the first sliding plate (211) and the second sliding plate (212) are connected, a connecting pole (25) extends from the second sliding plate (212) substantially perpendicularly, first screw threads (251) are defined on outer surface of the connecting pole (25), the seat (22) comprises a center portion (221), a through hole (2210) is defined in the seat (22) and passes through the center portion (221); and
wherein the locking assembly comprises a first locking element (31), the first locking element (31) comprises a first main body (311) and a connecting portion (312) substantially perpendicular to the first main body (311);
**characterized in that**
the connecting pole (25) penetrates through the through hole (2210) of the seat (22); and **in that**
the connecting portion (312) is a hollow structure with a first screw hole (3122) defined therein, the first screw hole (3122) and the first screw threads (251) of the connecting pole (25) can be coupled,
when it is needed to lock the quick release coupling board (10) with the sliding assembly (20), the first screw hole (3122) of the first locking element (31) is screwed with the first screw threads (251) of the connecting pole (25), and when the first locking element (31) is locked firmly, the step surface (213) of the guiding piece (21) is locked with the blocking sheet (121).

2. The locking device of claim 1, wherein the connecting portion (312) and the though hole (2210) are circled-shaped, and a radius of the connecting portion (312) is smaller than a radius of the through hole (2210).

3. The locking device of claim 1, wherein two locating blocks (223) are formed on a top surface (221) of the center portion (221), the two locating blocks (223) face with each other, a sliding opening (2230) is defined in two sides of each locating block (223) respecting to the sliding slot (120), and the seat (22) is connected to the quick release coupling board (10) via the sliding openings (2230).

4. The locking device of claim 3, wherein the top surface (221) and the two locating blocks (223) together form a receiving portion (224) for receiving the guiding piece (21).

5. The locking device of claim 1, wherein the bottom plate (11) is rectangular, the side walls (12) each extend perpendicularly downwards from a respective one of periphery sides of the bottom plate (11), and each blocking sheet (121) is integrally formed with the corresponding side wall (12).

6. The locking device of claim 1, wherein the seat (22) comprises elastic holding portions (222) each positioned on one side of the center portion (221), and the elastic holding portions (222) each are configured to clip a pipe.

7. The locking device of claim 6, wherein a channel (2212) is defined in middle of the center portion (221), the channel (2212) penetrates through two opposite sidewalls of the center portion (221) and connects the two elastic holding portions (222).

8. The locking device of claim 7, wherein the locking assembly comprises a second locking element (32) to be screwed with the first locking element (31), the second locking element (32) comprises a second main body (321) and an abutting portion (322) perpendicular to the second main body (321), a recess (3210) is defined in the second main body (321), a shape and size of the recess (3210) are corresponding to those of the first main body (31) for receiving the first main body (31), the abutting portion (322) is a hollow structure with a second screw hole (3212) defined therein, the second screw hole (3212) penetrates through the abutting portion (322) and communicates with the recess (3210), male screw threads (3120) are formed on outer surface of the connecting portion (312), the second screw hole (3212) and the male screw threads (3120) of the connecting portion can be coupled, when the pipe is sleeved in the elastic clip loose, the sliding assembly (20) can slide along the pipe, when the pipe is sleeved in the elastic clip firmly, the second screw hole (3212) of the second locking element (32) is screwed with the male screw threads (3120) of the first locking element (31), the abutting portion (322) abuts the center portion (221) of the seat (22), the second locking element (32) is screwed firmly towards the seat (22), thereby the elastic clip is firmly clipped to the pipe.

9. The locking device of claim 1, wherein the locking device (30) is mounted on a mounting gimbal, a plurality of locating holes (110) are defined in the bottom plate (11) for fixing an image device.

10. The locking device of any one of claims 6 to 8, wherein each of the elastic holding portions (222) is a hollow circle tube.

11. The locking device of any one of claims 1 to 10, wherein a width of the first sliding plate (211) is greater than that of the second sliding plate (212).

## Patentansprüche

1. Verriegelungsvorrichtung, die Folgendes umfasst:
einen Schnelltrennkupplungsträger (10) und
eine Gleitanordnung (20), die dazu ausgelegt ist, gleitbar mit dem Schnelltrennkupplungsträger (10) verbunden zu sein; wobei die Verriegelungsvorrichtung ferner eine Verriegelungsanordnung (30) umfasst und die Verriegelungsanordnung (30) mit der Gleitanordnung (20) verbunden und dazu ausgelegt ist, den Schnelltrennkupplungsträger (10) an die Gleitanordnung (20) zu verriegeln,
wobei der Schnelltrennkupplungsträger (10) Folgendes umfasst:
eine Bodenplatte (11) und zwei gegenüberliegende Seitenwände (12), wobei die zwei Seitenwände (12) jeweils einen Gleitschlitz (120) definieren, wobei jeder Gleitschlitz (120) eine Blockierauflage (121) gegenüber der Bodenplatte (11) umfasst;
wobei die Gleitanordnung (20) Folgendes umfasst:
ein Führungsstück (21) und einen Sitz (22), eine Form und Größe des Führungsstücks (21) entsprechen einer Form und Größe des Gleitschlitzes (120), das Führungsstück (21) umfasst eine erste Gleitplatte (211) und eine zweite Gleitplatte (212), die mit der ersten Gleitplatte (211) verbunden ist, die erste Gleitplatte (211) definiert eine Stufenfläche (213), die dort gebildet ist, wo die erste Gleitplatte (211) und die zweite Gleitplatte (212) verbunden sind, ein Verbindungspfosten (25) erstreckt sich von der zweiten Gleitplatte (212) im Wesentlichen senkrecht, ein erstes Schraubengewinde (251) ist auf einer Außenfläche des Verbindungspfostens (25) definiert, der Sitz (22) umfasst einen mittleren Abschnitt (221), ein Durchgangsloch (2210) ist im Sitz (22) definiert und geht durch den mittleren Abschnitt (221); und
wobei die Verriegelungsanordnung ein erstes Verriegelungselement (31) umfasst, das erste Verriegelungselement (31) einen ersten Hauptkörper (311) und einen Verbindungsabschnitt (312), der im Wesentlichen senkrecht zum Hauptkörper (311) verläuft, umfasst;
**dadurch gekennzeichnet, dass**
der Verbindungspfosten (25) durch das Durchgangsloch (2210) des Sitzes (22) dringt und dadurch, dass
der Verbindungsabschnitt (312) eine hohle Struktur mit einem darin definierten ersten Schraubenloch (3122) ist, das erste Schraubenloch (3122) und das erste Schraubengewinde (251) des Verbindungspfostens (25) gekoppelt werden können,
wenn der Schnelltrennkupplungsträger (10) mit der Gleitanordnung (20) verriegelt werden muss, das erste Schraubenloch (3122) des ersten Verriegelungselements (31) mit dem ersten Schraubengewinde (251) des Verbindungspfostens (25) verschraubt wird, und wenn das erste Verriegelungselement (31) fest verriegelt ist, die Stufenfläche (213) des Führungsstücks (21) mit der Blockierauflage (121) verriegelt ist.

2. Verriegelungsvorrichtung nach Anspruch 1, wobei der Verbindungsabschnitt (312) und das Durchgangsloch (2210) kreisförmig sind und ein Radius des Verbindungsabschnitts (312) kleiner ist als ein Radius des Durchgangslochs (2210).

3. Verriegelungsvorrichtung nach Anspruch 1, wobei zwei Positionierungsblöcke (223) auf einer oberen Fläche (221) des mittleren Abschnitts (221) gebildet sind, die beiden Positionierungsblöcke (223) einander zugewandt sind, dem Gleitschlitz (120) entsprechend auf zwei Seiten jedes Positionierungsblocks (223) eine Gleitöffnung (2230) definiert ist und der Sitz (22) via die Gleitöffnungen (2230) mit dem Schnelltrennkupplungsträger (10) verbunden ist.

4. Verriegelungsvorrichtung nach Anspruch 3, wobei die obere Fläche (221) und die zwei Positionierungsblöcke (223) zusammen einen Aufnahmeabschnitt (224) zum Aufnehmen des Führungsstücks (21) bilden.

5. Verriegelungsvorrichtung nach Anspruch 1, wobei die Bodenplatte (11) rechteckig ist, die Seitenwände (12) sich von einer jeweiligen von Umfangsseiten der Bodenplatte (11) senkrecht nach unten erstrecken und jede Blockierauflage (121) mit der entsprechenden Seitenwand (12) integral gebildet ist.

6. Verriegelungsvorrichtung nach Anspruch 1, wobei der Sitz (22) elastische Halteabschnitte (222) umfasst, von denen jeder auf einer Seite des mittleren Abschnitts (221) positioniert ist, und die elastischen Halteabschnitte (222) jeweils dazu ausgelegt sind, eine Leitung festzuhalten.

7. Verriegelungsvorrichtung nach Anspruch 6, wobei ein Kanal (2212) in der Mitte des mittleren Abschnitts (221) definiert ist, der Kanal (2212) durch zwei gegenüberliegende Seitenwände des mittleren Abschnitts (221) dringt und die zwei elastischen Halteabschnitte (222 verbindet.

8. Verriegelungsvorrichtung nach Anspruch 7, wobei die Verriegelungsanordnung ein zweites Verriegelungselement (32) umfasst, das mit dem ersten Verriegelungselement (31) zu verschrauben ist, das zweite Verriegelungselement (32) einen zweiten Hauptkörper (321) und einen anstoßenden Abschnitt (322) senkrecht zum zweiten Hauptkörper (321) umfasst, im zweiten Hauptkörper (321) eine Ausnehmung (3210) definiert ist, eine Form und Größe der Ausnehmung (3210) jenen des ersten Hauptkörpers (31) zum Aufnehmen des ersten Hauptkörpers (31) entsprechen, der anstoßende Abschnitt (322) eine hohle Struktur mit einem zweiten darin definierten Schraubenloch (3212) ist, das zweite Schraubenloch (3212) durch den anstoßenden Abschnitt (322) dringt und mit der Ausnehmung (3210) kommuniziert, ein Schraubenaußengewinde (3120) auf einer Außenfläche des Verbindungsabschnitts (312) gebildet ist, das zweite Schraubenloch (3212) und das Schraubenaußengewinde (3120) des Verbindungsabschnitts gekoppelt werden können, wenn die Leitung lose vom elastischen Clip umhüllt ist, die Gleitanordnung (20) entlang der Leitung gleiten kann, wenn die Leitung fest vom elastischen Clip umhüllt ist, das zweite Schraubenloch (3212) des zweiten Verriegelungselements (32) mit dem Schraubenaußengewinde (3120) des ersten Verriegelungselements (31) verschraubt ist, der anstoßende Abschnitt (322) an den mittleren Abschnitt (221) des Sitzes (22) stößt, das zweite Verriegelungselement (32) fest zum Sitz (22) hin verschraubt ist, wodurch die Leitung fest vom elastischen Clip festgehalten wird.

9. Verriegelungsvorrichtung nach Anspruch 1, wobei die Verriegelungsvorrichtung (30) an einer Montageaufhängung montiert ist, eine Vielzahl von Positionierungslöchern (110) zum Fixieren einer Bildvorrichtung in der Bodenplatte (11) definiert ist.

10. Verriegelungsvorrichtung nach einem der Ansprüche 6 bis 8, wobei jeder der elastischen Halteabschnitte (222) ein hohles kreisförmiges Rohr ist.

11. Verriegelungsvorrichtung nach einem der Ansprüche 1 bis 10, wobei eine Breite der ersten Gleitplatte (211) größer ist als die der zweiten Gleitplatte (212).

## Revendications

1. Dispositif de verrouillage comprenant :
une plaque de raccord rapide (10) ; et
un ensemble de coulissement (20) configuré pour être raccordé, de manière coulissante, à la plaque de raccord rapide (10) ;
dans lequel le dispositif de verrouillage comprend en outre un ensemble de verrouillage (30), et l'ensemble de verrouillage (30) est raccordé à l'ensemble de coulissement (20) et est configuré pour verrouiller la plaque de raccord rapide (10) sur l'ensemble de coulissement (20),
dans lequel la plaque de raccord rapide (10) comprend :
une plaque inférieure (11) et deux parois latérales opposées (12), les deux parois latérales (12) définissent chacune une fente de coulissement (120), chaque fente de coulissement (120) comprend une feuille de blocage (121) opposée à la plaque inférieure (11) ;
dans lequel l'ensemble de coulissement (20) comprend :
une pièce de guidage (21) et un siège (22), une forme et une taille de la pièce de guidage (21) correspondent à une forme et une taille de la fente de coulissement (120), la pièce de guidage (21) comprend une première plaque de coulissement (211) et une seconde plaque de coulissement (212) raccordée à la première plaque de coulissement (211), la première plaque de coulissement (211) définit une surface de gradin (213) sur laquelle la première plaque de coulissement (211) et la seconde plaque de coulissement (212) sont raccordées, un pôle de raccordement (25) s'étend à partir de la première plaque de coulissement (212) sensiblement perpendiculairement, des premiers filetages de vis (251) sont définis sur la surface externe du pôle de raccordement (25), le siège (22) comprend une partie centrale (221), un trou débouchant (2210) est défini dans le siège (22) et passe par la partie centrale (221) ; et
dans lequel l'ensemble de verrouillage comprend un premier élément de verrouillage (31), le premier élément de verrouillage (31) comprend un premier corps principal (311) et une partie de raccordement (312) sensiblement perpendiculaire au premier corps principal (311) ;
**caractérisé en ce que** :
le pôle de raccordement (25) pénètre à travers le trou débouchant (2210) du siège (22) ; et **en ce que** :
la partie de raccordement (312) est une structure creuse avec un premier trou de vis (3122) défini à l'intérieur de cette dernière, le premier trou de vis (3122) et les premiers filetages de vis (251) du pôle de raccordement (25) peuvent être couplés,
lorsque l'on doit verrouiller la plaque de raccord rapide (10) avec l'ensemble de coulissement (20), le premier trou de vis (3122) du premier élément de verrouillage (31) est vissé avec les premiers filetages de vis (251) du pôle de raccordement (25), et lorsque le premier élément de verrouillage (31) est fermement verrouillé, la surface de gradin (213) de la pièce de guidage (21) est verrouillée avec la feuille de blocage (121).

2. Dispositif de verrouillage selon la revendication 1, dans lequel la partie de raccordement (312) et le trou débouchant (2210) sont en forme de cercle, et un rayon de la partie de raccordement (312) est inférieur à un rayon du trou débouchant (2210).

3. Dispositif de verrouillage selon la revendication 1, dans lequel les deux blocs de positionnement (223) sont formés sur une surface supérieure (221) de la partie centrale (221), les deux blocs de positionnement (223) se font face, une ouverture de coulissement (2230) est définie dans deux côtés de chaque bloc de positionnement (223) par rapport à la fente de coulissement (120), et le siège (22) est raccordé à la plaque de raccord rapide (10) via les ouvertures de coulissement (2230).

4. Dispositif de verrouillage selon la revendication 3, dans lequel la surface supérieure (221) et les deux blocs de positionnement (223) forment ensemble une partie de réception (224) pour recevoir la pièce de guidage (21).

5. Dispositif de verrouillage selon la revendication 1, dans lequel la plaque inférieure (11) est rectangulaire, les parois latérales (12) s'étendent chacune perpendiculairement vers le bas à partir d'un côté respectif des côtés périphériques de la plaque inférieure (11), et chaque feuille de blocage (121) est formée de manière solidaire avec la paroi latérale (12) correspondante.

6. Dispositif de verrouillage selon la revendication 1, dans lequel le siège (22) comprend des parties de support élastiques (222) chacune positionnées sur un côté de la partie centrale (221), et les parties de support élastiques (222) sont chacune configurées pour attacher un tuyau.

7. Dispositif de verrouillage selon la revendication 6, dans lequel un canal (2212) est défini au milieu de la partie centrale (221), le canal (2212) pénètre à travers deux parois latérales opposées de la partie centrale (221) et raccorde les deux parties de support élastiques (222).

8. Dispositif de verrouillage selon la revendication 7, dans lequel l'ensemble de verrouillage comprend un second élément de verrouillage (32) à visser avec le premier élément de verrouillage (31), le second élément de verrouillage (32) comprend un second corps principal (321) et une partie de butée (322) perpendiculaire au second corps principal (321), un évidement (3210) est défini dans le second corps principal (321), une forme et une taille de l'évidement (3210) correspondent à celles du premier corps principal (31) pour recevoir le premier corps principal (31), la partie de butée (322) et une structure creuse avec un second trou de vis (3212) défini à l'intérieur de cette dernière, le second trou de vis (3212) pénètre à travers la partie de butée (322) et communique avec l'évidement (3210), des filetages de vis mâles (3120) sont formés sur la surface externe de la partie de raccordement (312) le second trou de vis (3212) et les filetages de vis mâles (3120) de la partie de raccordement peuvent être couplés, lorsque le tuyau est emmanché dans l'attache élastique sans serrage, l'ensemble de coulissement (20) peut coulisser le long du tuyau, lorsque le tuyau est emmanché dans l'attache élastique fermement, le second trou de vis (3212) du second élément de verrouillage (32) est vissé avec les filetages de vis mâles (3120) du premier élément de verrouillage (31), la partie de butée (322) vient en butée contre la partie centrale (221) du siège (22), le second élément de verrouillage (32) est fermement vissé vers le siège (22), donc l'attache élastique est fermement attachée au tuyau.

9. Dispositif de verrouillage selon la revendication 1, dans lequel le dispositif de verrouillage (30) est monté sur une cardan de montage, une pluralité de trous de positionnement (110) sont définis dans la plaque inférieure (11) pour fixer un dispositif de prise d'image.

10. Dispositif de verrouillage selon l'une quelconque des revendications 6 à 8, dans lequel chacune des parties de support élastique (222) est un tube circulaire creux.

11. Dispositif de verrouillage selon l'une quelconque des revendications 1 à 10, dans lequel une largeur de la première plaque de coulissement (211) est supérieure à celle de la seconde plaque de coulissement (212).
